Europäisches Patentamt

European Patent Office

Office européen des brevets

(11) Publication number: **0 194 013**
**B1**

## (12) EUROPEAN PATENT SPECIFICATION

(45) Date of publication of patent specification: **09.11.88**

(21) Application number: **86300508.8**

(22) Date of filing: **27.01.86**

(51) Int. Cl.⁴: **B 64 D 17/02**

(54) Parachute.

(30) Priority: **28.02.85 GB 8505204**

(43) Date of publication of application:
**10.09.86 Bulletin 86/37**

(45) Publication of the grant of the patent:
**09.11.88 Bulletin 88/45**

(84) Designated Contracting States:
**BE CH FR GB IT LI NL**

(56) References cited:
**GB-A-2 084 090**
**US-A-3 822 844**
**US-A-4 399 969**

(73) Proprietor: **HARLEY CHUTES LIMITED**
**Paramont Building 139**
**North Weald Airfield Essex (GB)**

(72) Inventor: **Harbutt, John**
**21, The Paddocks**
**High Roding Dunmour Essex (GB)**

(74) Representative: **Ablett, Graham Keith et al**
**F.J. Cleveland & Company 40-43 Chancery Lane**
**London WC2A 1JQ (GB)**

Courier Press, Leamington Spa, England.

## Description

This invention relates to parachutes and more particularly to parachutes for parascending.

Parachuting originally developed as a life-saving means to allow a person to descend to the ground from a great height. Parachuting has now developed further into a separate sport, for example parascending where the parachutes travel upwards as well as downwards. Indeed, parascending exhibitions are popular at air shows.

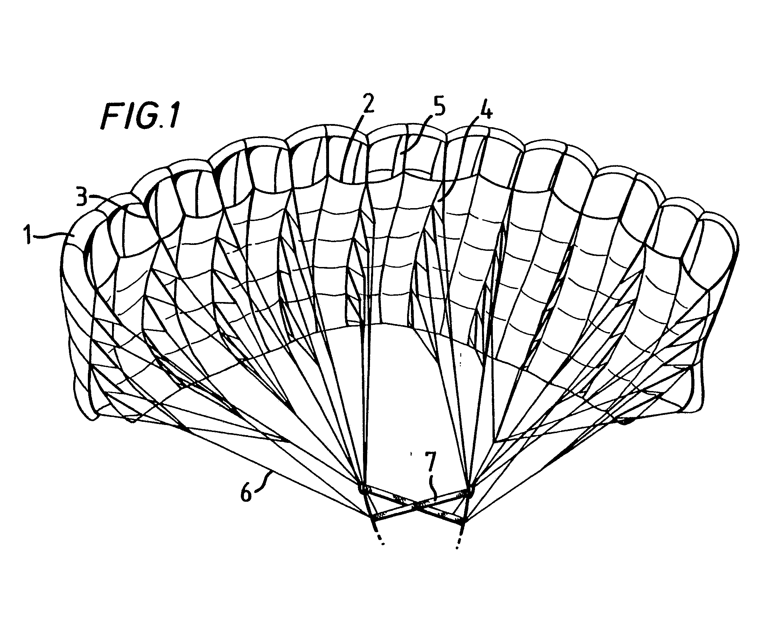

Figure 1 illustrates a parachute particularly suitable for the sport of parascending. The parachute comprises an upper sheet 1 and a lower sheet 2 which are joined together by ribs 3 to provide a ribbed structure as illustrated wherein a plurality of side-by-side tubes closed at one end are formed. As can be seen from the drawing, a parachutist is supported in a harness 7 which has a number of lines 6 connected to the parachute. These lines are attached to alternate load bearing ribs 3 by flares 4.

As parascending and parachuting develops as a sport, there are increasing demands on the manufacturer to reduce costs. Furthermore, as the boundaries of the sport are pushed forward more efficient parachutes having less resistance to air are desired by users.

With regard to the prior art e.g. according to US-A-4399969 which discloses a parachute comprising an upper and a lower flexible sheet joined together to provide a ribbed structure having a plurality of side-by-side tubes closed at one end, and support means for a parachutist having lines joined to selected ribs formed as load bearing ribs, the invention is characterised in that adjacent load bearing ribs are spaced apart by at least two non load bearing ribs.

Consequently, a reduction in the load bearing ribs can be achieved compared with hitherto manufactured parachutes. Since the manufacture of the load bearing ribs is labour and material intensive, considerable savings in both manufacturing time and material can be achieved. Furthermore, by having less load bearing ribs fewer lines are required producing further cost savings together with less resistance to air during use of the parachute.

Preferably, each load bearing rib has at least three spaced apart lines joined thereto. In this way, the load produced by the parachutist is spread evenly over the parachute. Conveniently, each respective line is joined to a load bearing rib by a portion of flexible sheet material or by a portion of that rib extending from the lower sheet. With parachutes of this type further savings in labour costs and material are achieved since fewer portions of material are required to join lines to load bearing ribs. Preferably, the parachute has at least three load bearing ribs and the upper and lower sheets are rectangular.

An example of the present invention will now be described with reference to the accompanying drawings, in which:

Figure 1 illustrates a prior art parachute;

Figure 2 illustrates a front view of a portion of the prior art parachute;

Figure 3 illustrates a perspective view of one half of a parachute embodying the present invention;

Figure 4 illustrates a front view of a section of parachute shown in Figure 3; and

Figure 5 illustrates a stitching pattern for a parachute embodying the present invention.

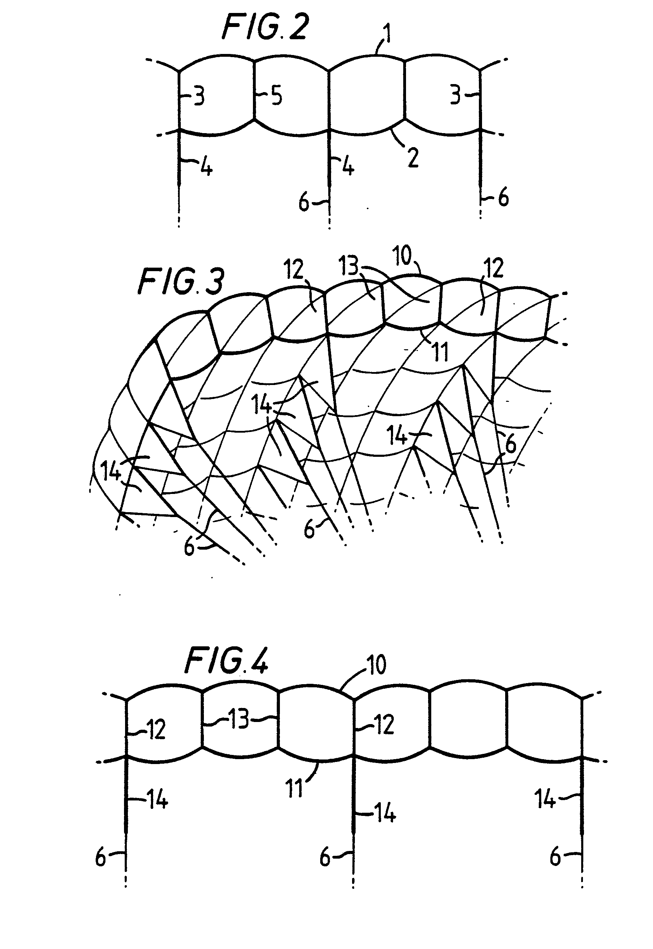

Referring to Figures 1 and 2, it can be seen that the prior art parachute includes lower and upper sheets 1 and 2 respectively, joined together to form a ribbed structure having a plurality of side-by-side tubes closed at one end. The ribs are formed into load bearing ribs 3 and non load bearing ribs 5. Each load bearing rib has a flare of material 4 for attaching a line 6 thereto. The lines from the parachute are gathered together at a support harness 7 worn by a parachutist.

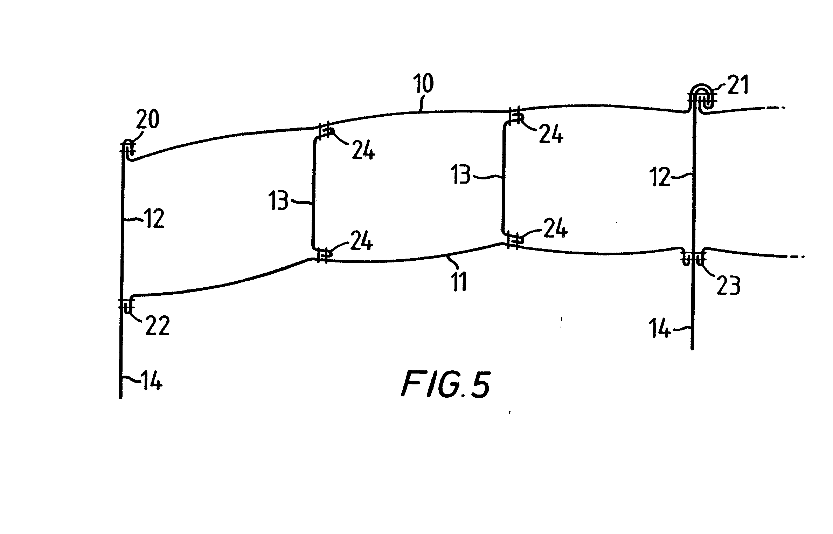

Referring to Figures 3 and 4, the parachute embodying the invention comprises an upper sheet 10 and lower sheet 11 joined together to provide a ribbed structure having a plurality of side-by-side tubes closed at one end. The ribs joining upper and lower sheets are formed to be either load bearing ribs 12 or non load bearing ribs 13. With the present embodiment of the invention adjacent load bearing ribs are spaced apart by two non load bearing ribs 13 as shown in the figures. The load bearing ribs have joined thereto a flare of sheet material 14 for connection to a line 6. It will be appreciated that the construction of the load bearing ribs is complicated and requires considerable labour and material to manufacture. Consequently, by comparing Figure 2 with Figure 4 it can be seen that the degree of labour and material required to make a unit width of parachute is less for the parachute embodying the present invention. In addition, the number of lines required over a unit width of parachute is reduced with the present invention compared to the prior art shown in Figures 1 and 2. It will be apparent that different numbers of lines can be employed for joining to each load rib and different ways of joining the lines to the load rib can be employed. For example, the flare 14 could comprise an extension of the rib 12. Furthermore, although Figure 3 illustrates employing two non load bearing ribs between adjacent load bearing ribs, it would be possible to have three non load bearing ribs between adjacent load bearing ribs.

Although Figure 4 illustrates applying the present invention to a parachute having a rectangular upper and lower sheet, it will be apparent that the present invention can be applied to parachutes generally having a ribbed structure.

Referring to Figure 5, it can be seen that the upper and lower sheets are formed from a plurality of joined together portions of flexible material. For sheet 10 a portion of material extends between each load bearing rib 12 and is sewn to the load bearing rib as shown by numeral 20, and further sewn to the adjacent portion of material as shown by numeral 21. For sheet 11, numerals 22 and 23 illustrate the joints where the load bearing ribs extend through the lower sheet 11 to form flares 14. The upper and lower attachment of the non loading bearing ribs are shown by numeral 24. Thus sheets 10 and 11 can comprise a continuous piece of material or a plurality of portions of material joined together.

## Claims

1. Parachute comprising an upper (10) and a lower (11) flexible sheet joined together to provide a ribbed structure having a plurality of side-by-side tubes closed at one end, and support means for a parachutist having lines (6) joined to selected ribs formed as load bearing ribs (12) characterised in that adjacent load bearing ribs (12) are spaced apart by at least two non load bearing ribs (13).

2. A parachute as claimed in Claim 1 wherein each load bearing rib (12) has at least three spaced apart lines (6) joined thereto.

3. A parachute as claimed in Claim 1 or Claim 2 wherein each respective line (6) is joined to a load bearing rib (12) by a portion of flexible sheet material (14).

4. A parachute as claimed in Claim 1 or 2 wherein each line (6) is joined to a load bearing rib (12) by a portion of that rib extending from the lower sheet (11).

5. A parachute as claimed in any preceding claim having at least three load bearing ribs (12).

6. A parachute as claimed in any preceding claim wherein the upper (10) and lower (11) and sheets are rectangular.

7. A parachute as claimed in any preceding claim wherein the upper (10) and lower (11) sheets comprise a plurality of joined together portions of flexible material.

## Patentansprüche

1. Fallschirm bestehend aus einem oberen (10) und einem unteren (11) flexiblen Laken, die zusammengefügt sind, sodaß sie eine gerippte Struktur bilden, die eine Vielzahl von seitlich aneinandergeordneten und an einem Ende verschlossenen Schläuchen aufweist, und aus einer Tragevorrichtung für einen Fallschirmspringer, die Leinen (6) aufweisen, welche an bestimmten Rippen angefügt sind, die als Lasttragerippen (12) ausgebildet sind, dadurch gekennzeichnet, daß benachbarte Lasttragerippen (12) durch mindestens zwei nicht lasttragende Rippen (13) räumlich voneinander getrennt sind.

2. Fallschirm wie im Patentanspruch 1 beschrieben, wobei jede Lasttragerippe (12) mindestens drei räumlich voneinander getrennte Leinen (6) aufweist, die an sie angefügt sind.

3. Fallschirm wie im Patentanspruch 1 oder im Patentanspruch 2 beschrieben, wobei jede einzelne Leine (6) durch einen Abschnitt aus flexiblem Lakenstoff (14) an eine Lasttragerippe (12) angefügt ist.

4. Fallschirm wie im Patentanspruch 1 oder 2 beschrieben, wobei jede Leine (6) durch einen Abschnitt der Rippe, die vom unteren Laken (11) herausragt, an eine Lasttragerippe (12) angefügt ist.

5. Fallschirm wie in einem der vorstehenden Patentansprüche beschrieben, der mindestens drei Lasttragerippen (12) aufweist.

6. Fallschirm wie in einem der vorstehenden Patentansprüche beschrieben, wobei das obere (10) und das untere (11) Laken rechteckig sind.

7. Fallschirm wie in einem der vorstehenden Patentansprüche beschrieben, wobei das obere (10) und das untere (11) Laken eine Vielzahl von zusammengefügten Abschnitten eines flexiblen Stoffes umfassen.

## Revendications

1. Parachute comprenant une nappe supérieure (10) et une nappe inférieure (11) assemblées entre elles pour constituer une structure nervurée comportant côte à côte un ensemble de tubes fermés à une extrémité, et un moyen de support du parachutiste comportant des suspentes (6) assemblées à des nervures sélectionnées (6) constituant des nervures porteuses de charge (12), caractérisé en ce que des nervures porteuses de charge adjacentes (12) sont séparées par au moins deux nervures non porteuses de charge (13).

2. Parachute comme revendiqué à la revendication 1, dans lequel dans chaque nervure porteuse de charge (12) sont assemblées au moins trois suspentes espacées (6).

3. Parachute comme revendiqué à l'une des revendications 1 ou 2, dans lequel chaque suspente (6) est assemblée à une nervure porteuse de charge (12) par un morceau du tissu souple (14) des nappes.

4. Parachute comme revendiqué à l'une des revendications 1 ou 2, dans lequel chaque suspente (6) est assemblée à une nervure porteuse de charge (12) par un morceau de cette nervure prolongeant la nappe inférieure (11).

5. Parachute comme revendiqué à l'une quelconque des revendications précédentes comportant au moins trois nervures porteuses de charge (12).

6. Parachute comme revendiqué à l'une quelconque des revendications précédentes dans lequel les nappes supérieure (10) et inférieure (11) sont rectangulaires.

7. Parachute comme revendiqué à l'une quelconque des revendications précédentes dans lequel les nappes supérieure (10) et inférieure (11) comportent un ensemble de morceaux de tissu souple assemblés entre eux.

FIG.1

*FIG.2*

*FIG.3*

*FIG.4*

FIG.5

0 194 013